# FASCICULE DE BREVET EUROPEEN

(11) **EP 0 750 964 B1**
(45) Date de publication et mention de la délivrance du brevet: **12.05.1999**
(21) Numéro de dépôt: 96401220.7
(22) Date de dépôt: 07.06.1996
(51) Int. Cl.: B23K 37/06, B23K 9/035, B23K 26/18

(54) **Dispositif de soudage d'au moins deux flans métalliques au moyen d'un faisceau à haute densité d'énergie**
Verfahren zum Schweissen von mindestens zwei Stirnflächen mit einem Strahl von hoher Energiedichte
Method for welding at least two sheets blank using an energy beam of high density

(30) Priorité: 29.06.1995 FR 9507815
(43) Date de publication de la demande: 02.01.1997
(73) Titulaire: SOLLAC S.A., 92800 Puteaux (FR)
(72) Inventeur: Verrelle, Dominique, 62570 - Wizernes (FR); Peru, Gilles, 59240 - Dunkerque (FR)
(74) Mandataire: Ventavoli, Roger

(56) Documents cités:
- DE-A- 2 729 238
- DE-U- 9 403 605
- US-A- 3 662 144

## Description

La présente invention concerne un dispositif de soudage bord à bord d'au moins deux flans métalliques au moyen d'un faisceau à haute densité d'énergie, comportant des moyens permettant un mouvement relatif des flans métalliques à souder par rapport au faisceau à haute densité d'énergie, et des moyens de protection du dispositif.

La présente invention concerne plus particulièrement les moyens de protection, disposés sous le plan de référence horizontal des flans métalliques, en regard du faisceau.

Dans les dispositifs de soudage d'au moins deux flans métalliques au moyen d'un faisceau à haute densité d'énergie, les flans métalliques étant disposés bords à bords ou en léger recouvrement pour former un plan de joint, comportant des moyens permettant un mouvement relatif des flans métalliques à souder par rapport au faisceau à haute densité d'énergie, par exemple des moyens permettant un mouvement des flans métalliques sous une tête de soudage fixe, ou des moyens permettant un mouvement de la tête de soudage le long du plan de joint des flans métalliques, lesdits flans métalliques étant fixes, ou bien encore des moyens permettant à la fois un mouvement dans une direction des flans métalliques à souder et un mouvement dans la direction opposée de la tête de soudage, il est connu d'utiliser des moyens de protection.

Ces moyens de protection ont pour objet d'une part d'éviter la projection des scories incandescentes générées pendant le soudage sur les parties des dispositifs de soudage situées en regard du faisceau à haute densité d'énergie, et d'autre part de protéger ces parties de l'impact du faisceau en l'absence de flans métalliques, par exemple au tout début de l'opération de soudage et tout à la fin, ou encore en cas de problème d'accostage des flans métalliques.

Il est connu d'utiliser pour cela des puits thermiques constitués de blocs de cuivre, généralement refroidis à l'eau.

Ce type de puits thermique en cuivre présente un certain nombre d'inconvénients.

D'abord ce type de puits thermique en cuivre, ou en un autre matériau métallique, s'échauffe en service et cette élévation de température peut conduire à des endommagements rédhibitoires, par exemple la fonte superficielle du cuivre, et à des collages des scories incandescentes provenant des tôles soudées.

Ensuite, ce type de puits thermique présente l'inconvénient de réfléchir les rayons infrarouges issus du faisceau à haute densité d'énergie vers les flans métalliques.

Enfin, dans les dispositifs présentant des moyens permettant un mouvement de la tête de soudage le long du plan de joint des flans métalliques, lesdits flans métalliques étant fixes, l'utilisation des blocs de cuivre refroidis nécessite un montage complexe et une maintenance difficile.

D'autre part, l'usinage de pièces de cuivre de grande dimension, parfois supérieure à 2500 mm dans le cas de certaines machines industrielles, conduit à des coûts élevés.

Le document allemand DE-A-27 29 238 décrit une coquille de forme destinée au soudage au moyen d'électrodes de rails de chemin de fer ou de profilés destinés à la construction métallique. La coquille de forme est munie d'un insert en matériau réfractaire, de préférence en céramique.

La présente invention a pour objet de proposer des moyens de protection des dispositifs de soudage, spécifiquement adaptés au soudage au moyen d'un faisceau à haute densité d'énergie, disposés sous le plan de référence horizontal des flans métalliques, en regard du faisceau, susceptibles de constituer un puits thermique permettant :
- de résister à haute température, tant par son point de fusion que par sa résistance au choc thermique,
- de disperser l'énergie thermique reçue par le faisceau à haute densité d'énergie,
- de limiter au maximum tout rayonnement par réflexion,
- de limiter au maximum toute pollution du dispositif de soudage,
- un montage et un démontage rapide,
   et étant peu onéreux à l'emploi.

La présente invention concerne plus particulièrement un dispositif de soudage au moyen d'un faisceau à haute densité d'énergie d'au moins deux flans métalliques disposés pour former un plan de joint, comportant des moyens de déplacement relatif entre les flans métalliques à souder et le faisceau à haute densité d'énergie, et des moyens de protection, disposés sous le plan de référence horizontal des flans métalliques, en regard du faisceau à haute densité d'énergie, caractérisé en ce que les moyens de protection sont formés par un matériau réfractaire préformé, à base de bauxite à liaison céramique argileuse, comportant en % poids :
- de 80 à 85 % d'alumine Al₂O₃
- de 8 à 12 % de silice SiO₂
- de 2,8 à 3,5 % de TiO₂
- de 2 à 3 % d'un mélange de particules d'oxyde de fer, essentiellement présent sous forme Fe₂O₃, et de K₂O
- moins de 1 % d'impuretés secondaires parmi Na₂O, CaO, MgO.

Selon d'autres caractéristiques de l'invention :
- les particules d'oxyde de fer, de K₂O et les impuretés secondaires sont uniformément réparties autour des cristaux d'alumine ;
- le matériau réfractaire préformé est disposé dans un support métallique dont les dimensions sont légèrement supérieures à celles du matériau réfractaire préformé ;
- la distance entre le plan de référence horizontal des flans métalliques et la face supérieure du matériau réfractaire préformé est supérieure à la moitié de la distance focale du faisceau à haute densité d'énergie ;
- la largeur du matériau réfractaire préformé est supérieure à deux fois la tache d'impact du faisceau sur ledit matériau en l'absence de flan métallique, le faisceau étant focalisé dans les conditions de soudage ;
- l'épaisseur du matériau réfractaire préformé est supérieure à 10 mm ;
- la face supérieure du matériau réfractaire préformé est usinée en forme de cuvette ;
- le matériau réfractaire préformé est refroidi au moyen d'un fluide refroidissant circulant à l'intérieur de celui-ci ;
- le faisceau à haute densité d'énergie est un faisceau laser.

Les caractéristiques et avantages de l'invention apparaîtront au cours de la description qui va suivre, donnée uniquement à titre d'exemple.

Pour répondre au problème posé, c'est à dire proposer des moyens de protection, disposés sous le plan de référence horizontal des flans métalliques, en regard du faisceau, susceptibles de constituer un puits thermique permettant :
- de résister à haute température, tant par son point de fusion que par sa résistance au choc thermique,
- de disperser l'énergie thermique reçue par le faisceau à haute densité d'énergie,
- de limiter au maximum tout rayonnement par réflexion,
- de limiter au maximum toute pollution du dispositif de soudage,
- un montage et un démontage rapide,
   et étant peu onéreux à l'emploi, l'idée de base a été d'utiliser des produits réfractaires sous forme de plaquette ou de barres monolithiques, aisément interchangeables.

Ces produits réfractaires doivent être capables de supporter le choc thermique initial de l'impact du faisceau à haute densité d'énergie. Par exemple la température de l'impact d'un faisceau laser est supérieure à 2000 °C, et peut atteindre dans des conditions extrêmes, voire même dépasser 3000 °C. Il en est de même pour un faisceau d'électrons.

Ces produits réfractaires doivent également résister dans le temps à des températures élevées.

La Demanderesse a testé un certain nombre de produits réfractaires.

Une série de dix plaquettes en matériau réfractaire a été placée dans une glissière, positionnée dans une machine de soudage de flans métalliques au moyen d'un faisceau laser, sous le plan de référence horizontal des flans métalliques, en regard du faisceau.

Des plaquettes en produit réfractaire carboné ou graphité, de type connu, par exemple en alumine graphitée, alumine-carbone, ou magnésie-carbone, ont été utilisées.

L'emploi de ces produits réfractaires carbonés ou graphités donnent des résultats satisfaisants en terme de tenue au choc thermique initial et en terme de tenue dans le temps, mais ont conduit à de forts dégagements de fumée. Par ailleurs le contact du faisceau laser sur ce type de matériau produit une forte luminescence, vraisemblablement du fait de l'oxydation du carbone en surface.

Ce type de matériau nécessite donc un inertage de la zone d'impact du faisceau sur le matériau réfractaire par un gaz inerte, de l'argon par exemple, pour donner satisfaction, ce qui n'est pas sans poser de problèmes du point de vue procédé de soudage et nécessite une installation coûteuse.

Des plaquettes en produit réfractaire du type SiC à liaison nitrure ont également été testées.

L'emploi de ce type de produit conduit à un bullage du matériau lors du premier passage du faisceau et à une forte luminescence.

Ce bullage est vraisemblablement dû à la transformation du silicium Si en silice SiO₂, qui du fait de l'oxydation du carbone sous forme de gaz carbonique CO₂, conduit à la formation de silice bullée.

Des plaquettes en matériau réfractaire du type corindon à liaison nitrure ont également été testées.

L'emploi de ce type de matériau réfractaire s'est révélé catastrophique en terme de tenue au choc thermique.

La Demanderesse a également testé des plaquettes en alumine Al₂O₃ pure.

L'emploi de ce type de matériau réfractaire s'est révélé encore plus catastrophique en terme de tenue au choc thermique que l'emploi d'un matériau du type corindon à liaison nitrure.

La Demanderesse a également testé des plaquettes en silice vitreuse, qui est un produit sans dilatation.

L'emploi de ce type de produit conduit à une forte volatilisation de la silice avec dépôt de poussière sur la machine de soudage. Cette volatilisation importante de la silice la rend rapidement inutilisable. De plus on assiste à un phénomène de fonte de la silice en superficie lors du passage du faisceau et recristallisation de celle-ci après passage du faisceau, ce qui entraîne que la silice vitreuse perd sa propriété d'absence totale de dilatation.

Enfin, la Demanderesse a utilisé des plaquettes à base de bauxite à liaison céramique argileuse du type comportant en % poids :
- de 80 à 85 % d'alumine Al₂O₃
- de 8 à 12 % de silice SiO₂
- de 2,8 à 3,5 % de TiO₂
- de 2 à 3 % d'un mélange de particules d'oxyde de fer, essentiellement présent sous forme Fe₂O₃, et de K₂O
- moins de 1 % d'impuretés secondaires parmi Na₂O, CaO, MgO.

De manière surprenante, l'utilisation de ce produit, relativement commun, n'a conduit à aucune fissuration et aucun écaillage en surface, le dégagement de fumée n'est que très léger et le phénomène de luminescence est très faible.

La série de plaquette installée sur la machine de soudage laser a fait l'objet d'un test de 10 000 passages du faisceau laser en conditions semi-industrielles.

A l'issue de ces essais, la partie centrale des plaquettes présente un creusement de 4 à 6 mm dans lequel se disposent les particules métalliques fondues et/ou oxydées.

On ne constate aucune réaction entre les particules métalliques et le matériau réfractaire.

La projection sur la surface du matériau réfractaire de l'invention d'un faisceau diffus de même valeur énergétique que celle rencontrée lors du soudage en condition industrielles conduit à la formation de phases vitreuses du type mullite à la surface du matériau réfractaire. Ces phases vitreuses solidifient sous leur forme amorphe après passage du faisceau, et lors des passages ultérieurs du faisceau, ses effets sur le matériau sont atténué par rapport au matériau initial.

Ce matériau, dont la haute réfractarité est due à l'alumine (Al₂O₃) présente une forte résistance aux chocs thermiques du fait de l'apparition à une température inférieure à 1000°C d'une phase thermoplastique permettant de relaxer les contraintes produites lors d'un échauffement brutal du matériau.

Ce phénomène a été mis en évidence en soignant la réalisation du matériau réfractaire préformé en plaquettes, c'est à dire en veillant à ce que les particules d'oxyde de fer, de K₂O et d'impuretés secondaires soient uniformément réparties autour des cristaux d'alumine.

Ces impuretés, que l'on croyait néfastes à la bonne tenue du matériau, permettent en réalité de développer la relative plasticité du matériau, et le rendent tout à fait adapté aux conditions particulières auxquelles il est soumis dans le cadre de la protection des dispositifs de soudage.

Ainsi, pour tirer le maximum d'efficacité du matériau réfractaire de l'invention, il faut veiller, lors de sa fabrication sous forme préformée, à ce que les particules d'oxyde de fer, de K₂O et d'impuretés secondaires soient uniformément réparties autour des cristaux d'alumine.

Cette condition n'est toutefois pas absolument indispensable pour obtenir un matériau de qualité satisfaisante. En effet si la fabrication du matériau est réalisée sans précautions particulières, celui-ci répond parfaitement au problème posé.

Afin d'assurer la meilleure protection possible du dispositif de soudage, la distance entre le plan de référence horizontal des flans métalliques et la face supérieure du matériau réfractaire préformé doit être supérieure à la moitié de la distance focale F du faisceau à haute densité d'énergie, lorsque celui-ci est focalisé dans les conditions de soudage.

De plus la largeur du matériau réfractaire préformé doit être supérieure à deux fois la tache d'impact du faisceau sur ledit matériau en l'absence de flan métallique, le faisceau étant focalisé dans les conditions de soudage.

Enfin pour assurer une durée de vie correcte du matériau réfractaire préformé de l'invention, il est préférable que l'épaisseur de celui-ci soit supérieure à 10 mm.

Afin d'assurer un montage et un démontage rapide et peu onéreux du moyen de protection des dispositifs de soudage selon l'invention, le matériau réfractaire préformé est disposé dans un support métallique, par exemple en forme de gouttière, ledit support étant fixé au dispositif de soudage.

Le matériau réfractaire préformé est disposé dans un support métallique dont les dimensions sont légèrement supérieures à celles dudit matériau.

Cette caractéristique a pour objet de permettre, si nécessaire, une légère dilatation du matériau réfractaire préformé.

De manière préférentielle, le matériau réfractaire préformé est constitué d'une série de briques alignées les unes à la suite des autres dans le support métallique.

Ces briques peuvent être soit fabriquées directement à dimension, par exemple par coulage ou pressage hydraulique ou isostatique, soit obtenues par découpe et/ou usinage d'éléments préfabriqués de plus grandes dimensions.

Cette solution d'utiliser plusieurs briques alignées les unes à la suite des autres plutôt qu'un élément unique permet de changer la première brique indépendamment des autres, car celle-ci est souvent plus sollicitée que les autres du fait du réglage initial du faisceau au début de campagne de soudage par exemple, ainsi que les briques correspondant au point de démarrage et au point d'arrêt du faisceau à haute densité d'énergie.

Selon une variante de réalisation, la face supérieure du matériau réfractaire préformé, qu'il soit sous forme d'un élément unique ou d'une série de briques alignées les unes à la suite des autres, est usinée en forme de cuvette, par exemple en forme de U ou en forme de V.

Selon une autre variante de réalisation, le matériau réfractaire préformé est refroidi au moyen d'un fluide refroidissant circulant à l'intérieur de celui-ci.

Le moyen de protection selon l'invention dans les dispositifs de soudage bord à bord d'au moins deux flans métalliques est particulièrement adapté pour la protection des installations de soudage au moyen d'un faisceau laser, mais l'est également pour les installations de soudage au moyen d'un faisceau d'électrons, et s'applique aussi bien aux installations de soudage bords à bords ou en léger recouvrement de flans de tôle d'acier que de flans en aluminium ou alliage d'aluminium, ou même de tout type d'alliage.

## Revendications

1. Dispositif de soudage au moyen d'un faisceau à haute densité d'énergie d'au moins deux flans métalliques disposés pour former un plan de joint, comportant des moyens de déplacement relatif entre les flans métalliques à souder et le faisceau à haute densité d'énergie, et des moyens de protection, disposés sous le plan de référence horizontal des flans métalliques, en regard du faisceau à haute densité d'énergie, caractérisé en ce que les moyens de protection sont formés par un matériau réfractaire préformé, à base de bauxite à liaison céramique argileuse, comportant en % poids :
- de 80 à 85 % d'alumine Al₂O₃
- de 8 à 12 % de silice SiO₂
- de 2,8 à 3,5 % de TiO₂
- de 2 à 3 % d'un mélange de particules d'oxyde de fer, essentiellement présent sous forme Fe₂O₃, et de K₂O
- moins de 1 % d'impuretés secondaires parmi Na₂O, CaO, MgO.

2. Dispositif selon la revendication 1, caractérisé en ce que les particules d'oxyde de fer, de K₂O et les impuretés secondaires sont uniformément réparties autour de l'alumine.

3. Dispositif selon l'une des revendications précédentes, caractérisé en ce que le matériau réfractaire préformé est disposé dans un support métallique dont les dimensions sont légèrement supérieures à celles du matériau réfractaire préformé.

4. Dispositif selon l'une des revendications précédentes, caractérisé en ce que la distance entre le plan de référence horizontal des flans métalliques et la face supérieure du matériau réfractaire préformé est supérieure à la moitié de la distance focale du faisceau à haute densité d'énergie.

5. Dispositif selon l'une des revendications précédentes, caractérisé en ce que la largeur du matériau réfractaire préformé est supérieure à deux fois la tache d'impact du faisceau sur ledit matériau en l'absence de flan métallique, le faisceau étant focalisé dans les conditions de soudage.

6. Dispositif selon l'une des revendications précédentes, caractérisé en ce que l'épaisseur du matériau réfractaire préformé est supérieure à 10 mm.

7. Dispositif selon l'une des revendications précédentes, caractérisé en ce que la face supérieure du matériau réfractaire préformé est usinée en forme de cuvette.

8. Dispositif selon l'une des revendications précédentes, caractérisé en ce que le matériau réfractaire préformé est refroidi au moyen d'un fluide refroidissant circulant à l'intérieur de celui-ci.

9. Dispositif selon l'une des revendications précédentes, caractérisé en ce que le faisceau à haute densité d'énergie est un faisceau laser.

## Claims

1. Device for the welding, by means of a high-energy-density beam, of at least two metal panels arranged to form a joint plane, comprising means of relative displacement between the metal panels to be welded and the high-energy-density beam, and means of protection which are arranged beneath the horizontal reference plane of the metal panels, facing the high-energy-density beam, characterized in that the means of protection are formed by a preformed refractory material based on bauxite with argilaceous ceramic bonding, comprising in % by weight:
- from 80 to 85% of alumina, Al₂O₃;
- from 8 to 12% of silica, SiO₂;
- from 2.8 to 3.5% of TiO₂;
- from 2 to 3% of a mixture of iron oxide particles, essentially present in the form of Fe₂O₃, and of K₂O; and
- less than 1% of secondary impurities among which are Na₂O, CaO and MgO.

2. Device according to Claim 1, characterized in that the iron oxide and K₂O particles and the secondary impurities are uniformly distributed around the alumina.

3. Device according to one of the preceding claims, characterized in that the preformed refractory material is arranged in a metal support whose dimensions are slightly greater than those of the preformed refractory material.

4. Device according to one of the preceding claims, characterized in that the distance between the horizontal reference plane of the metal panels and the upper face of the preformed refractory material is greater than half the focal length of the high-energy-density beam.

5. Device according to one of the preceding claims, characterized in that the width of the preformed refractory material is greater than twice the spot size of the beam impacting on the said material in the absence of a metal panel, the beam being focused under the welding conditions.

6. Device according to one of the preceding claims, characterized in that the thickness of the preformed refractory material is greater than 10 mm.

7. Device according to one of the preceding claims, characterized in that the upper face of the preformed refractory material is machined into the form of a cup.

8. Device according to one of the preceding claims, characterized in that the preformed refractory material is cooled by means of a coolant circulating inside it.

9. Device according to one of the preceding claims, characterized in that the high-energy-density beam is a laser beam.

## Patentansprüche

1. Vorrichtung zum Verschweißen mindestens zweier metallischer Scheiben, die so angeordnet sind, daß sie eine Verbindungsebene aufweisen, mittels eines Strahles hoher Energiedichte, mit einer Anordnung zur Relativverschiebung zwischen den zu verschweißenden metallischen Scheiben und dem Strahl hoher Energiedichte und mit einer Schutzanordnung, die unterhalb der waagrechten Wirkebene der metallischen Scheiben in Richtung des Strahles hoher Energiedichte angeordnet ist, dadurch gekennzeichnet, daß die Schutzanordnung aus einem vorgefertigten feuerfesten Material hergestellt ist auf Basis von Bauxit mit keramischer tonhaltiger Bindung, die in Gewichtsprozent enthält:
- 80 bis 85 % Aluminiumoxid Al₂O₃
- 8 bis 12 % Siliziumdioxid SiO₂
- 2,8 bis 3,5 % TiO₂
- 2 bis 3 % eines Gemisches aus Teilchen des Eisenoxids, die im wesentlichen in Form von Fe₂O₃ vorliegt, und des K₂O
- weniger als 1 % sekundärer Verunreinigungen, darunter Na₂O, CaO, MgO.

2. Vorrichtung nach Anspruch 1, dadurch gekennzeichnet, daß die Teilchen des Eisenoxids und des K₂O und die sekundären Verunreinigungen gleichförmig um das Aluminiumoxid verteilt sind.

3. Vorrichtung nach einem der vorhergehenden Ansprüche, dadurch gekennzeichnet, daß das vorgefertigte feuerfeste Material in einer metallischen Halterung angeordnet ist, deren Abmessungen geringfügig größer als diejenigen des vorgefertigten feuerfesten Materials sind.

4. Vorrichtung nach einem der vorhergehenden Ansprüche, dadurch gekennzeichnet, daß der Abstand zwischen der waagrechten Wirkebene der metallischen Scheiben und der Oberfläche des vorgefertigten feuerfesten Materials größer als die Hälfte des Brennpunktabstandes des Strahls hoher Energiedichte ist.

5. Vorrichtung nach einem der vorhergehenden Ansprüche, dadurch gekennzeichnet, daß die Breite des vorgefertigten feuerfesten Materials größer als die zweifache Auftreffläche des Strahls auf diesem Material ist bei Anwesenheit der metallischen Scheibe, wobei der Strahl unter Schweißbedingungen fokussiert ist.

6. Vorrichtung nach einem der vorhergehenden Ansprüche, dadurch gekennzeichnet, daß die Dicke des vorgefertigten feuerfesten Materials größer als 10 mm ist.

7. Vorrichtung nach einem der vorhergehenden Ansprüche, dadurch gekennzeichnet, daß die Oberfläche des vorgefertigten feuerfesten Materials napfförmig bearbeitet ist.

8. Vorrichtung nach einem der vorhergehenden Ansprüche, dadurch gekennzeichnet, daß das vorgefertigte feuerfeste Material mittels eines in seinem Inneren zirkulierenden Kühlfluids gekühlt ist.

9. Vorrichtung nach einem der vorhergehenden Ansprüche, dadurch gekennzeichnet, daß der Strahl hoher Energiedichte ein Laserstrahl ist.
